Europäisches Patentamt

(19) European Patent Office

Office européen des brevets

(11) Publication number : **0 450 449 B1**

## (12) EUROPEAN PATENT SPECIFICATION

(45) Date of publication of patent specification :
02.08.95 Bulletin 95/31

(51) Int. Cl.⁶ : **H01M 2/16**

(21) Application number : **91104680.3**

(22) Date of filing : **25.03.91**

(54) **Separator material for storage batteries and method for making the same.**

(30) Priority : **26.03.90 JP 78274/90**
**12.01.91 JP 13741/91**

(43) Date of publication of application :
**09.10.91 Bulletin 91/41**

(45) Publication of the grant of the patent :
**02.08.95 Bulletin 95/31**

(84) Designated Contracting States :
**DE FR**

(56) References cited :
**EP-A- 0 316 916**
**PATENT ABSTRACTS OF JAPAN, vol. 6, no.**
**243 (E-145)[1121], 2nd December 1982;**
**PATENT ABSTRACTS OF JAPAN, vol. 4, no.**
**157 (E-32)[639], 4th November 1980;**
**CHEMICAL ABSTRACTS, vol. 100, no. 26, 25th**
**June 1984, page 57, column 1, abstract no.**
**211254g, Columbus, Ohio, US;**

(73) Proprietor : **Daiwaboseki Co., Ltd.**
**6-8, Kyutaromachi**
**3-chome, Chuo-ku**
**Osaka-shi**
**Osaka (JP)**
Proprietor : **KANAI JUYO KOGYO CO., LTD.**
**1-banchi, Okuhata 4-chome**
**Itami-shi, Hyogo-ken 664 (JP)**

(72) Inventor : **Takai, Yousuke**
**115-go, 3, 455-banchi, Komiya,**
**Harima-cho**
**Kako-gun, Hyogo-ken, 675-01 (JP)**
Inventor : **Sano, Toyohiko**
**1434-31, Fukashino,**
**Mikunino-cho**
**Himeji-shi, Hyogo-ken, 671-02 (JP)**
Inventor : **Ikkanzaka, Isao**
**21-go, 3-ban, Higashinaniwa 1-chome**
**Amagasaki-shi, Hyogo-ken, 660 (JP)**

(74) Representative : **Kador & Partner**
**Corneliusstrasse 15**
**D-80469 München (DE)**

## Description

Separator material for storage batteries and method for making the same

Background of the invention

[Field of the invention]

This invention relates to sulfonated conjugate fibers having a surface portion constituting a specific ethylene copolymer and a core portion constituting polypropylene, non-woven fabric sheets obtainable from such conjugate fibers, storage battery separators using such non-woven fabric sheet and method of manufacturing such battery separators.

[Description of the Prior Art]

Polyolefin fibers are chemically stable fibers which are extensively utilized as non-woven fabric sheet and the like. When forming non-woven fabric sheet, their integrity is improved usually by the use of low melting point components having excellent thermal bonding properties. More specifically, core-sheath conjugate fibers are used, which consist of a core portion of polypropyrene and a sheath portion of polyethylene or like low melting point compounds. Such conjugate fibers, however, are usually poorly hydrophilic, thus posing limitations on their use as storage battery separators and like purposes.

For example, as alkaline storage battery separators there have been proposed polyolefin non-woven fabric sheets obtained by carrying out a surface active agent treatment to enhance hydrophilicity and non-woven fabric sheets mainly consisting of polyamide fibers having superior hydrophilicity although the oxidization resistance is inferior; these examples of non-woven fabric sheets are disclosed in Japanese unexamined laid open patent applications (Tokkai) No. 147956/1983, 194255/1983 and 39362/1986.

Non-woven fabric sheets used for alkaline storage battery separators are required to have resistance against alkalis, i.e., strongly alkaline electrolytes, and also resistance against oxidization, i.e., electrolytic oxygen generated during charging. In addition, it has to have high specific volume sufficient to maintain permeation of and wetting by the electrolyte. Further, it has to have sufficient shape stability to be free from interelectrode short-circuits that result from dielectric breakdown stemming from denaturing, shrinkage or dissolution caused during use and also have adequate mechanical strength for the assembly operation.

The polyamide fibers which have been extensively used up to now as non-woven fabric sheets for storage battery separators have neither sufficient alkali resistance nor sufficient oxidation resistance; also, their shape stability is unsatisfactory.

Accordingly, there have been attempts to subject polyolefin fibers to surface active agent treatment before use. In this case. however, with charging and discharging carried out a number of times the surface active agent is reduced. This means that the hydrophilicity gradually deteriorates.

To solve the above problems, it has been intended to use ethylene-vinylalcohol copolymer fibers as disclosed in Japanese unexamined laid open patent application (Tokkai) No. 34849/1988 or to use polyethylene or polypropylene fibers after sulfonation as disclosed in Japanese unexamind laid open patent application (Tokkai) No. 175256/1983, 57568/1989, 132043/1989 and 132044/1989 and EP-A-0316916 (1989/05/24).

According to the prior art as noted above. however, polyolefin is subjected to graft-copolymerization with acrylic acid or the like using electromagnetic radiation, and the resultant copolymer is sulfonated with fuming sulfuric acid or the like. This means that a hydrogen substitution reaction of tertiary carbon is involved. The reaction efficiency of this reaction is inferior and poses problems in the process of manufacture. In addition, the introduction of sulfo groups can not be effected efficiently, and it is difficult to control the reaction factor. JP-A-55105962 discloses exposure of polypropylene fiber to radiation, followed by graft polymerisation with, e.g. acrylic acid.

Further, according to EP-A-0316916 as noted above, acrylic acid copolymerized polyethylene is pulverized after sulfonization, and the resultant particles are bonded by adhesion to the surface of polypropylene fibers, thus presenting the problem of ready detachment of the bonded particles from the surface.

Summary of the invention

The present invention is intended to solve the above problems inherent in those prior arts, and it seeks to provide sulfonated conjugate fibers using ethylene copolymer having a specific structure capable of efficient sulfo group introduction with concentrated sulfurinc acid as well as for use on the surface portion of the fibers and polyolefin for the core portions, non-woven fabric sheet using such sulfonated conjugate fibers, storage battery separators using such non-woven fabric sheets and methods of manufacturing such battery separators.

According to the invention there is provided a separator material for storage batteries, comprising a fabric sheet made of sulfonated conjugate fibers comprising at least first and second components thermally bonded together, said first component occupying a surface layer, said second component occupying a core portion, said first component comprising an ethylene copolymer containing at least a unit represented as

$$-CH_2-C(SO_3H)(COOH)-$$

and comprising 0.5 to 25% by weight of ethylenecarbonic acid monomer and 99.5 to 75% by weight of ethylene, said ethylenecarbonic acid monomer containing 0.5 to 25% by weight of acrylic acid and/or maleic acid and 0 to 24.5% by weight of acrylic acid ester, said second component comprising a non-sulfonated polyolefin, said first component having a melting point $Tm_2$ °C of $70 < Tm_1 < 130$ and said second component having a melting point $Tm_2$ °C of $Tm_1 + 20 < Tm_2 < 250$, said first component occupying 30% or more of the fiber surface.

According to the invention there is provided a method for making a separator material for storage batteries from a fiber web comprising 30% or more by weight of core-sheath type conjugate fibers of a thermally bonding type, said-conjugate fibers comprising a surface portion of an ethylene copolymer comprising 0.5 to 25% by weight of ethylenecarbonic monomer and 99.5 to 75% by weight of ethylene, said ethylenecarbonic acid monomer containing 0.5 to 25% by weight of acrylic acid and/or maleic acid and 0 to 24.5% by weight of acrylic acid ester, said surface portion having a melting point of $Tm_1$ °C of $70 < Tm_1 < 130$, said fibers further comprising an inner portion of a polyolefin having a melting point $TM_2$ °C of $TM_1 + 20 < Tm_2 < 250$, said method comprising thermally pressing said web by passage through thermal press rollers, thereby forming a non-woven fabric sheet through thermal bonding of the constituent fibers caused by melting of the surface portion of said core-sheath type conjugate fibers, and sulfonizing said sheet by dipping in a concentrated sulfuric acid bath heated to 30 to 90°C, thereby introducing sulfo groups into tertiary carbon atom locations of the ethylene copolymer of the surface portion to replace hydrogen groups.

Brief Description of the Drawings
--------------------------------

Figure 1 is a graph showing the relation between discharge capacity retention and number of charging/discharging cycles.

Figure 2 is a view showing an infrared absorption spectrum of the non-woven fabric sheet before treatment with concentrated sulfuric acid in Example 2.

Figure 3 is a view showing an infrared absorption spectrum of the alkalin battery separator after treatment with concentrated sulfuric acid in Example 2.

Figure 4 shows a cross sectional view of an embodiment conjugate fiber in this invention.

[Detailed Description of the invention]

To attain the above object of the invention, there are provided sulfonated conjugate fibers comprising at least first and second components thermally bonded together, the first component occupying a surface layer, the second component occupying a core portion, the first component constituting an olefinic random copolymer containing at least a unit represented as $-CH_2-C (SO_3H) (COOH)-$, and the second component constituting a polyolefin having a melting point no higher than 250 °C.

In the sulfonated conjugate fibers noted above, the first component is suitably an ethylene copolymer composed of 0.5 to 25 % by weight of ethylenecarbonate acid monomer containing 0.5 to 25 % by weight of ethylenecarbonic acid of acrylic acid and/or maleic acid, 0 to 24.5 % by weight of acrylic acid ester and 99.5 to 75 % by weight of ethylene, and the second component is suitably composed of polyolefin having a melting point no higher than 250 °C, the first component occupying 30 % or more of the fiber surface.

According to the invention, there is also provided a non-woven fabric sheets comprising a mixture of 30 % or more by weight of conjugate fibers noted above and other poly olefin fibers, the first component of the conjugate fibers being a thermal bonding component.

According to the invention, there is further provided a battery separator consisting of non-woven fabric sheets composed of a mixture of 30 % or more by weight of the sulfonated conjugate fibers noted above and other polyolefinic fibers, the first component of the conjugate fibers being a thermal bonding component.

In the battery separator noted above, ethylenecarbonic acid provided by addition with sulfo groups of the first component suitably occupies 0.4 to 4 mol % of the first component.

The battery separator noted above suitably consists of core-sheath type conjugate fibers with sheath and core components constituted by the first and second components, respectively.

According to the invention, there are further provided conjugate fibers of thermally bonding type made from precursors comprising a first component occupying a surface layer and having a comparatively low melting point and a second component occupying a core portion and having a comparatively high melting point, the first component constituting an ethylene copolymer containing at least a unit represented by a formula -$CH_2$ -CH(COOR)-, where COOR represents a carboxylic group or an ester group, the second component constituting a polyolefin having a melting point nor higher than 250 °C.

In the battery separator noted above, said first components of the conjugate fibers are directly bonded to one another in forming said non-woven fabric sheet.

According to the invention, there is yet further provided a method of manufacturing a battery separator comprising a step of thermally pressing a fiber web composed of 30 % or more by weight of core-sheath type conjugate fibers of a thermally bonding type comprising a surface portion constituting an ethylene copolymer composed of 0.5 to 25 % by weight of ethylenecarbonic monomer containing 0.5 to 25 % by weight of ethylenecarbonic acid of acrylic acid and/or maleic acid having a melting point $Tm_1$ °C of $70 < Tm_1 < 130$, 0 to 24.5 % by weight of acrylic acid ester and 99.5 to 75 % by weight of ethylene and an inner portion constituted by polyolefin having a melting point $Tm_2$ °C of $Tm_1 + 20 < Tm_2 < 250$ and other polyolefinic fibers by pressing the fiber web through a pair of flat or embossing thermal press rollers, thereby forming the non-woven fabric sheets through thermal bonding of the constituent fibers caused by melting of the surface portion of the core-sheath type conjugate fibers, and a subsequent step of sulfonizing the non-woven non-woven fabric sheets by dipping the non-woven fabric sheets in a concentrated sulfuric acid bath heated to 30 to 90 °C, thereby introducing sulfo groups into tertiary carbon atom locations of the ethylene copolymer of the surface portion to which carboxylic groups have been bonded.

The sulfonated conjugate fibers according to the invention, comprising at least a first component occupying a surface portion and a second component occupying a core portion, can be used to obtain a non-woven fabric sheet which has excellent bonding properties. This is so because first component precusor which contributes to bonding is present in great amounts in the surface layer of the fibers. In addition, since the first component constitutes olefinic random copolymers containing units represented as -$CH_2$-C $(SO_3H)$ (COOH)-, it is possible to have sulfo groups ($SO_3H$) present accurately in a desired amount and consequently provide hydrophilicity. Examples of the olefinic random copolymers are of ethylene, propylene and copolymers thereof.

With the suitable constitution of the sulfonated conjugate fibers according to the invention that the first component is an ethylene copolymer composed of 0.5 to 25 % by weight of ethylenecarbonic acid monomer containing 0.5 to 25 % by weight of ethylenecarbonic acid of acrylic acid and/or maleic acid, 0 to 24.5 % by weight of acrylic acid ester and 99.5 to 75 % by weight of ethylene and that the second component is composed of polyolefin having a melting point no higher than 250 °C, the first component occuypying 30 % or more of the fiber surface, superior adhesion and sulfo group introduciton properties can be obtained.

With the constitution of the non-woven fabric sheet according to the invention consisting of a mixture of 30 % or more by weight of the sulfonated conjugate fibers and other polyolefin fibers, the first component of the conjugate fibers being a thermal bonding component, it is possible to obtain a non-woven fabric sheet of a desired bonding state irrespective of whether the non-woven fabric sheet is partly or perfectly formed of conjugate fibers.

With the constitution of the battery separator according to the invention consisting of non-woven fabric sheets composed of a mixture of 30 % or more by weight of the sulfonated conjugate fibers and other polyolefinic fibers, the first component of the conjugate fibers being a thermal bonding component, it is possible to provide hydrophilicity suitable particularly for alkaline storage battery separators.

With the preferred constitution of the storage battery separator according to the invention that ethylenecarbonic acid with sulfo groups added thereto of the first component occupies 0.4 to 4 mol % of the first component, it is possible to provide hydrophilicity more suitable for alkaline storage battery separators.

With the preferred constitution of the stroage battery separator according to the invention consisting of core-sheath type conjugate fibers with sheath and core components constituted by the first and second components, respectively, the hydrophilic first component is present in a portion in contact with the electrolyte as battery constituent, hydrophilicity can be provided which is more suitable to alkaline storage battery separators.

Further with use, since the first component of the precursor constituting the conjugate fibers of thermally bonding type according to the invention comprises a polymer component constituted by an ethylene copolymer containing a unit represented as -$CH_2$ -CH(COOR)-, where COOR represents a carboxylic group or an ester group, the conjugate fibers may be readily sulfonated under comparatively mild conditions using sulfuric acid after the formation of the non-woven fabric sheet.

With the method of manufacturing battery separator according to the invention, it is possible to manufacture storage battery separators logically.

As has been described in the foregoing, the conjugate fibers before sulfonization according to the invention , when used as thermally bonding fibers for non-woven fabric sheet, can be satisfactorily thermally bonded to polyolefin fibers.

In addition, they are capable of sulfo group introduction to obtain thermally bonded non-woven fabric sheets, which have excellent hydrophilicity and can be suitably used for alkaline storage battery separators.

Further, the storage battery separator according to the invention has excellent moisture absorption property and can long maintain affinity with electrolyte and enhance liquid retention. Besides, it is excellent in alkali resistance and oxidization resistance and thus has long life and can greatly improve battery life.

Furthermore, according to the invention it is possible to very easily carry out the sulfonation treatment for enhancing the affinity of the separator to the electrolyte and thus provide battery separators having stable quality.

Further, with core-sheath type thermal bonding conjugate fibers, in which the precursor of the first component constitutes an ethylene copolymer and the precursor of second component constitutes polyolefin, at the time of non-woven fabric sheet formation the fibers after drying are fixed by thermal fusion of the low melting ethylene copolymer, and after formation of the non-woven fabric sheet the ethylene copolymer exhibits very excellent affinity to electrolyte and moisture absorption property owing to sulfo groups introduced at tertiary carbon atom locations to which carboxyl groups have been bonded, and to the remaining carboxyl groups.

[Description of the Preferred Embodiments]

The invention concerns sulfonated conjugate fibers, non-woven fabric sheets formed therefrom, alkaline battery separators using such non-woven fabric sheets and methods of manufacturing such a battery separator. It is predicated on our finding that copolymerization of a unit represented by the formula $-CH_2-CH-(COOH)-$ with ethylene permits ready sulfonization of tertiary carbon bonded to carbonic acid. These sulfonated polyethylene copolymer fibers have both chemical stability and hydrophilicity and can solve problems inherent in materials used for prior art battery separators. Thus, they permit development of the conjugate fibers, non-woven fabric sheet thereof and storage battery separator obtained through sulfonization of the non-woven fabric sheet according to the invention.

The ethylene copolymer containing a unit represented as $-CH_2-CH(COOH)-$ which is the first component precursor of the sulfonated conjugate fibers according to the invention has as low a melting point as below about 130°C while having a strong self-bonding property. The conjugate fibers according to the invention, which have 30 % by weight more of the first component precursor on their surface, are advantageous as thermal bonding fibers for non-woven fabric sheets. If the content of ethylenecarbonic acid monomer in the first component precursor is above about 25 % by weight, fusion between polymer pellets and fibers is pronounced, thus leading to trouble in the yarn-spinning processes. If the content is below 1 % by weight, on the other hand, the factor of sulfonation of non-woven fabric sheet as will be described later is insufficient.

The first component precursor containing ethylenecarbonic acid monomer in the above range readily undergoes decomposition at a temperature of 260 °C or above if its melting point $Tm_1$ °C is $70 < Tm_1 < 130$. The second component which is a support component of the conjugate fibers is suitably capable of spinning at a temperature no higher than 260 °C, preferably no higher than 250 °C.

When the first component precursor is made to be a thermal bonding component by fusion, the second component should be thermally stable. This requires that the melting point $Tm_2$ of the second component is higher than the melting point $Tm_1$ °C of the first component precursor by 20 °C or more.

The polyolefin of the second component is suitably a homopolymer or copolymer of polypropylene or a copolymer of polymethyl 1-pentene. It is possible to use as well high density polyethylene or poly(1-butene) copolymer having melting point higher than the melting point of the first component precursor by 20°C or more. Poly(l-butene) has the formula $-[CH_2-C(CH_2CH_3)H]_n-$.

Since the conjugate fibers before sulfonation are used as thermal bonding fibers, 30 % or more of their surface should be occupied by the first component precursor. Preferably, they should be of the parallel type where 70 % or more of their surface is occupied by the precursor or of sheath-core type where their surface is entirely occupied by the first component precursor.

Such conjugate fibers according to the invention before sulfonation can be thermally treated either in situ or together with other fibers to obtain non-woven fabric sheet. The first component precursor of the conjugate fibers can be readily sulfonized in the non-woven fabric sheet.

More specifically, the side chain of ethylene copolymer has carboxyl groups contained in the first component precursor, and sulfo group is introduced into tertiary carbon atom locations of main chain, to which the carboxyl groups are bonded.

The sulfonation reaction is brought about by treating the non-woven fabric sheet with fuming sulfuric acid, condensed sulfuric acid, sulfur trioxide gas, chlorosulfonic acid, etc. Using condensed sulfuric acid is suitable for sulfonation reaction factor control.

The non-woven fabric sheet obtained through sulfonation in the above way according to the invention is constituted by polyolefin fibers containing 30 % or more of the conjugate fibers noted above, with the first component of the conjugate fibers being a thermal bonding component.

If the conjugate fibers are contained at least by 30 %, sufficient adhesion to maintain the shape of non-woven fabric sheet can be obtained. Other polyolefin fibers used with the conjugate fibers have a melting point equal to or higher than the melting point of the second component of conjugate fibers and may be polypropylene, polymethyl 1-pentene or homopolymers or copolymers of high density polyethylene. The non-woven fabric sheet may be formed by forming the staple fibers in the usual way using a carding machine or random weaver (Rando Webber) into a web and thermal press bonding the web.

Alternatively, short cut fibers are processed in a paper-making process into a web, which is then thermally treated. The thermal bonding process is carried out at a temperature higher than the softening point of the first component precursor of the conjugate fibers before sulfonization but lower than the melting points of the second component and other polyolefin fibers.

The non-woven fabric sheet according to the invention is obtained in the above way as such or as paper, felt, cloth, etc., and it is imparted with hydrophilicity through a sulfonization treatment. Using this non-woven fabric sheet an alkaline storage battery separator, which is satisfactory in affinity to alkaline electrolyte, excellent in permeability, moisture absorption property, liquid-retaining capacity and durability and is capable of providing stable battery performance in repeated charging and discharging over a long time.

Sulfo-group-added ethylenecarbonic acid that is contained in the first component of the conjugate fibers in non-woven fabric sheet will cause gelation or dissolution of fibers in alkaline liquid if its content in the first component exceeds 5 mol %. For this reason, the sulfonation degree is controlled depending on use. Suitable sulfonation degree is usually 0.4 to 4 mol % for battery separator purposes, 4 to 15 mol % for wet wiper purposes, and 4 to 20 mol % for ammonia deodorization and moisture absorption purposes.

Further, it is known that in the sulfonation treatment on the non-woven fabric sheet the electron density of tertiary carbon atoms (or asymmetric carbon atoms) in the main chain, to which carboxyl groups in the first component of the conjugate fibers are bonded, is reduced by the induced reaction effect (or I-effect) of carboxyl groups having an electron-attracting property, and the sulfo group substitution reactivity is increased compared with the case of polyethylene or polypropylene alon.

Therefore, the method using fuming sulfuric acid, which is hazardous and will lead to deterioration of operation environment as well as having poor process reproducibility, or a treatment with condensed sulfuric acid under a high temperature condition of 100 °C or above is unnecessary. It is possible, we have found, to introduce sulfo groups quickly, efficiently and in a short period of time in a dipping treatment using concentrated sulfuric acid in a low temperature range of 30 to 90°C. This is practically and industrially important.

Further, we have found a method of treatment, which can permit reaction in a low temperature range and therefore has superior process control property as well as being free from damage to processing apparatus and deterioration of the mechanical strength of fibers, and is efficient and very excellent in reproducibility. Further, washing after sulfonation treatment is carried out using liquid free from alkali metal and like anions. Particularly, due care has to be paid when carrying out washing after sulfonation with high degree of sulfonation.

Examples will now be given. It is not to be construed that these examples are limitative, but that they are merely illustrative of our invention.

Fiber Production Examples 1 to 5

Conjugate fibers consisting of ethylene copolymer as shown in Table 1 as a sheath component and polypropylene with a MFR (melt flow value) of 30 g/10 min. (at 230 °C) as a core component, with sheath-to-core component ratio of 40 : 60, was obtained through fusion spinning at a spinning temperature of 260 °C. The fibers thus obtained were extended to 2.3 times their length in heated water at 60 °C. The fibers were then crimping cured and then cut to a length of 51 mm. Some of these fibers were cut to a length of 5 mm without crimping to obtain short cut fibers for paper making. The compositions of the sheath portion and breaking strength and elongation of obtained fibers are shown in Table 1.

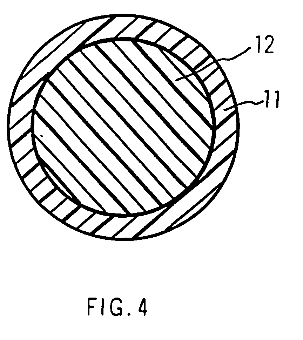

The obtained sheath-to-core conjugate fibers are shown in Figure 4. It shows a cross sectional view of the examples conjugate fiber. Conjugate fibers consisting of ethylene copolymer sheath component (11), and polypropylene core component (12), namely first component occupying a surface layer(11), said second component occupying a core portion(12).

Comparative Fiber Production Examples 4 and 5

Conjugate fibers were obtained by spinning in the same way as in Example 1 except for that ethylene copolymer with a lower ethylene content, polyethylene and polypropyrene were used for the sheath component in Fiber production example 1. The compositions of the sheath componnent and breakage strength and elongation of the obtained fibers are shown in Table 1.

Non-woven fabric sheet Production Examples 1 to 6

The fibers obtained in Fiber production examples 1 and 4 were rendered into webs using a roller card. Then, using a hot air penetration machine at 120 °C the sheath component was fused, and the fibers were thermally bonded together to obtain non-woven fabric of 40 g/m² . Also, short cut fibers were used to make paper, which was dried at 110°C, thus obtaining paper of 20 g/m² . The fiber proportions and strength of the non-woven fabric sheets and paper thus obtained are shown in Table 2.

Comparative Non-woven fabric sheet Production Examples 4 and 5

Non-woven fabric sheets consisting of 20 wt% of the fibers of Fiber production example 4 and 80 wt% of the fibers of comparative fiber production example 3 were produced in the same way as in Example 1. Also, non-woven fabric sheet and paper consisting of 100 wt% of fibers from comparative fiber production example 2 were produced. The strength of the obtained non-woven fabric sheet and paper is shown in Table 2.

Table 1

| | Fiber production examples | | | | | Comparative fiber production examples | | |
|---|---|---|---|---|---|---|---|---|
| | 1 | 2 | 3 | 4 | 5 | 1 | 2 | 3 |
| **Sheath component** | | | | | | | | |
| Copolymer component concentration (wt%) | | | | | | | | |
|   Acrylic acid | 4 | 4 | 7 | 22 | 5 | 30 | – | (*1) |
|   Methyl acrylate | – | – | – | – | 15 | – | – | |
|   Ethylene | 96 | 96 | 93 | 78 | 80 | 70 | 100 | |
| Vicat softening point ( ℃ ) | 85 | 85 | 84 | 50 | 56 | 45 | 120 | |
| Melting point ( ℃ ) | 99 | 99 | 97 | 85 | 86 | 75 | 130 | 163 |
| Melt Index (190 ℃, 2169 g applied) g/10 min. | 14 | 14 | 14 | 300 | 10 | 300 | 15 | – |
| **Properties of fibers** | | | | | | | | |
| Degree of fiber(D) | 2.0 | 3.0 | 3.1 | 3.2 | 3.2 | (*2) | 2.0 | 2.0 |
| Breking strength (g/D) | 3.1 | 3.2 | 2.8 | 2.5 | 3.0 | | 2.5 | 6.5 |
| Elongation (%) | 40 | 45 | 50 | 60 | 50 | | 70 | 40 |

(Note)  *1:  Polypropylene was used.

        *2:  No fibers could be obtained due to fusion.

## Table 2

| | Non-woven fabric sheet production examples | | | | | | Comparative production examples | |
|---|---|---|---|---|---|---|---|---|
| | 1 | 2 | 3 | 4 | 5 | 6 | 4 | 5 |
| **Fiber proportion (wt%)** | | | | | | | | |
| Fibers of Ex.1 | 100 | 50 | | | | | | |
| Fibers of Ex.4 | | | 100 | 50 | 50 | 30 | 20 | |
| Fibers of Comparative ex.2 | | | | | 50 | | | 100 |
| Fibers of Comparative ex.3 | | 50 | | 50 | | 70 | 80 | |
| **Thermal bonding temperature ( °C )** | 120 | 120 | 120 | 120 | 120 | 120 | 120 | 120 |
| **Performance of non-woven fabric sheet** | | | | | | | | |
| Breaking length (longitudinal) (Km) | 2.1 | 1.5 | 2.6 | 1.8 | 1.9 | 1.3 | 1.2 | Not bonded |
| Breaking length (transversal) (Km) | 0.8 | 0.6 | 1.1 | 0.7 | 0.7 | 0.5 | 0.3 | Same as above |
| **Performance of paper** | | | | | | | | |
| Breaking length (longitudinal)(Km) | 1.9 | - | 2.1 | - | - | - | - | Same as above |
| Breaking strength (transfersal)(Km) | 1.2 | - | 1.5 | - | - | - | - | Same as above |

The mechanical strength of non-woven fabric sheets in the Non-woven fabric sheet production examples and comparative non-woven fabric sheet production examples was measured as follows. A sample with a width of 50 mm and a grip length of 100 mm was pulled, and breaking strength (g) was measured at a speed of 300 mm/min.

The breaking length was calculated as follows.

$$\text{Breaking length (Km)} = \text{Tensile break strength (g)} / 50 \times \text{weight (g/m}^2\text{)}$$

### Example 1

Non-woven fabric sheet in non-woven fabric sheet production example 1 was held while being dipped in fuming sulfuric acid at 25 °C for 10 minutes, then washed with water and then dried in a drier at 60 °C for one hour. Water was dropped on the surface of the resultant non-woven fabric sheet to exhibit that there was no water-repelling property and that the sheet was instantly wholly wetted. At the same time, water was dropped on the surface of a non-woven fabric sheet of non-woven fabric sheet production example 6. It showed a pronounced water-repelling property over its entire surface. Its surface is not wetted even after the lapse of 10 minutes.

### Example 2

Blend fibers consisting of 2d x 51 mm, 70 % by weight of core-sheath type conjugate fibers, which consisted of ethylene-acrylic acid copolymer resin (with the copolymerization ratio of acrylic acid being 3 % by weight) for the sheath portion and polypropylene for the core portion (the melting point of copolymer resin for the sheath portion being 105 °C) and 1.5d x 38 mm, 30 % by weight of regular polypropylene fibers were processed using a carding machine and a cross wrapper to obtain a fiber agglomerate crossed web, followed by thermal press using a pair of calender rollers heated to 120 °C to obtain a non-woven fabric sheet with a weight of 65 g/m$^2$ and a thickness of 0.2 mm.

This non-woven fabric sheet was then held dipped in 97 wt% concentrated sulfuric acid heated to 80 °C for 3 minutes, then dipped in dilute sulfuric acid and then washed with a great quantity of water. Then, it was subjected to a neutralization treatment using diluted ammonia water, then sufficiently washed and dried to obtain a non-woven fabric sheet storage battery separator according to the invention.

### Example 3

Fiber mat consisting of 2d x 51 mm, 50 % by weight, of core-sheath conjugate fibers, which consisted of ethylene-acrylic acid copolymer resin (with the copolymerization ratio of acrylic acid being 4 % by weight) for the sheath portion and polypropylene for core portion (with the melting point of the copolymer resin for the sheath portion being 99 °C), and 1.5d x 38 mm, 50 % by weight of regular polypropylene fibers was subjected to thermal pressing using a pair of calender rollers heated to 110 °C to obtain non-woven fabric sheet with a weight of 65g/m$^2$ and a thickness of 0.20 mm.

This non-woven fabric sheet was treated with sulfuric acid under the same conditions as in Example 2 to obtain a non-woven fabric sheet storage battery separator according to the invention.

### Example 4

The same thermal press bonding non-woven fabric sheets as in Example 3 was held dipped in 97 wt% condensed sulfuric acid at 50 °C for 5 minutes, then dipped in dilute sulfuric acid and then washed with a great quantity of water. Then it was subjected to a neutralization treatment with ammonia water, then sufficiently washed and then dried to obtain a non-woven fabric sheet storage battery separator according to the invention.

### Comparative example 1

Fiber mat consisting of a blend web constituting 2d x 51 mm, 50 % by weight of core-sheath type conjugate fibers, which consisted of polypropylene for core and polyethylene for sheath, and 5d x 38 mm, 50 % by weight of regular polypropylene fibers, was subjected to thermal pressing using a pair of calender rollers at 130 °C to obtain a non-woven fabric sheet with a weight of 65 g/m and a thickness of 0.20 mm.

This non-woven fabric sheet was then treated with sulfuric acid under the same conditions as in Example 1 to obtain a non-woven fabric sheet storage battery separator according to the invention.

### Comparative example 2

Non-woven fabric sheet obtained in comparative example 1 was held dipped in 97 wt% concentrated sulfuric acid at 110 °C for 60 minutes. Then, it was washed with water and then subjected to neutralization with diluted ammonia water, followed by washing with water and drying, thus obtaining a non-woven fabric sheet strage battery of the contrast example.

Various physical property tests were conducted on the battery separators obtained in the Examples and Comparative examples.
Results are shown in Table 3.

Table 3

| Test Item | Ex.2 | Ex.3 | Ex.4 | Comparative ex.1 | Comparative ex.2 |
|---|---|---|---|---|---|
| Weight(g/m$^2$) | 68 | 68 | 68 | 65 | 67 |
| Thickness (mm) | 0.20 | 0.20 | 0.20 | 0.20 | 0.20 |
| Water content(wt%) | 0.79 | 0.75 | 0.85 | 0.03 | 0.17 |
| Liquid absorption speed (mm) | 52 | 47 | 45 | 0 | 32 |
| Liquid retention percentage (%) | 325 | 298 | 273 | 145 | 253 |
| Alkali resistance (%) | 0.3 | 0.2 | 0.2 | 0.2 | 0.5 |
| Oxidation resistance (%) | 0.1 | 0.1 | 0.1 | 0.1 | 0.2 |
| Mechanical strength retention percentage (%) after treatment with concentrated sulfuric acid | 92 | 95 | 98 | 95 | 73 |

In the table;

Liquid absorption speed: Level of absorption liquid when one end of battery separator sample 25 mm in width has been held dipped in caustic potash solution with a specific gravity of 1.30 for 30 minutes.

Liquid retention percentage: Liquid absorption percentage after battery separator having been dipped in caustic potash solution with a specific gravity of 1.30 has been suspended for 10 minutes and drained

Alkali resistance: Weight reduction percentage of battery separator after being held dipped in caustic potash solution with a specific gravity of 1.30 at 80 °C for 30 dayes.

Oxidation resistance: Weight reduction percentage of battery separator after being held dipped in blend solution composed of 250 ml of 5 wt% $KMnO_4$ solution and 50 ml of caustic potash solution with a specific gravity of 1.30 at 50 °C for one hour

Mechanical strength retention percentage after treatment with concentrated sulfuric acid: Tensile strength retention percentage of battery separator before and after treatment with concentrated sulfuric acid

Water content: After leaving battery separator under conditions of 20 °C and RH of 65 % for 24 hours

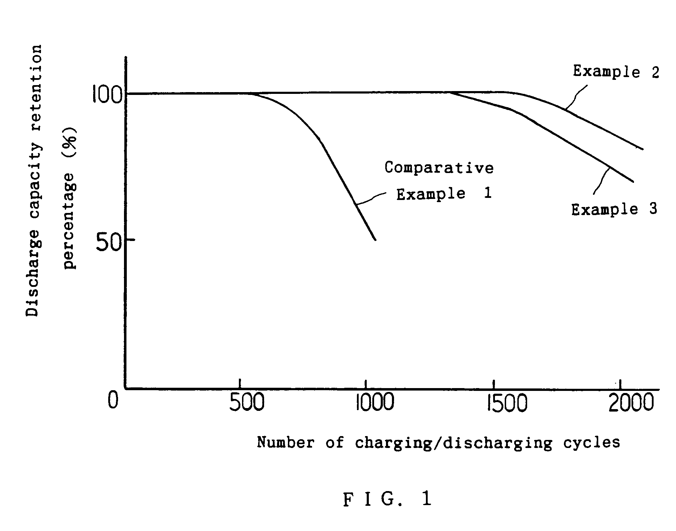

Figure 1 shows results of battery performance tests conducted using non-woven fabric sheet storage battery separators obtained in Examples 2 and 3 and Comparative example 1.

The graph shows the discharge capacity retention percentage of Ni-Cd storage batteries with a capacity of 1,200 mA hr. when charging and discharging are repeatedly carried out under a charging condition of 400 mA x 4 hr. and a discharging condition of 1 Ω constant resistance discharge x 2 hr. by assembling each battery separator noted above in the battery. The ordinate is taken for the discharge capacity retention percentage, and the abscissa for the number of charging/discharging cycles.

As can be seen from Figure 1, the batteries using the storage battery separators according to the invention are subject to less discharge capacity reduction after repeated charging and discharging and can withstand long use owing to their excellent affinity to electrolyte and chemical resistance. However, the storage battery using the battery separator of Comparative example 1 is subject to discharge capacity reduction in a short period of time.

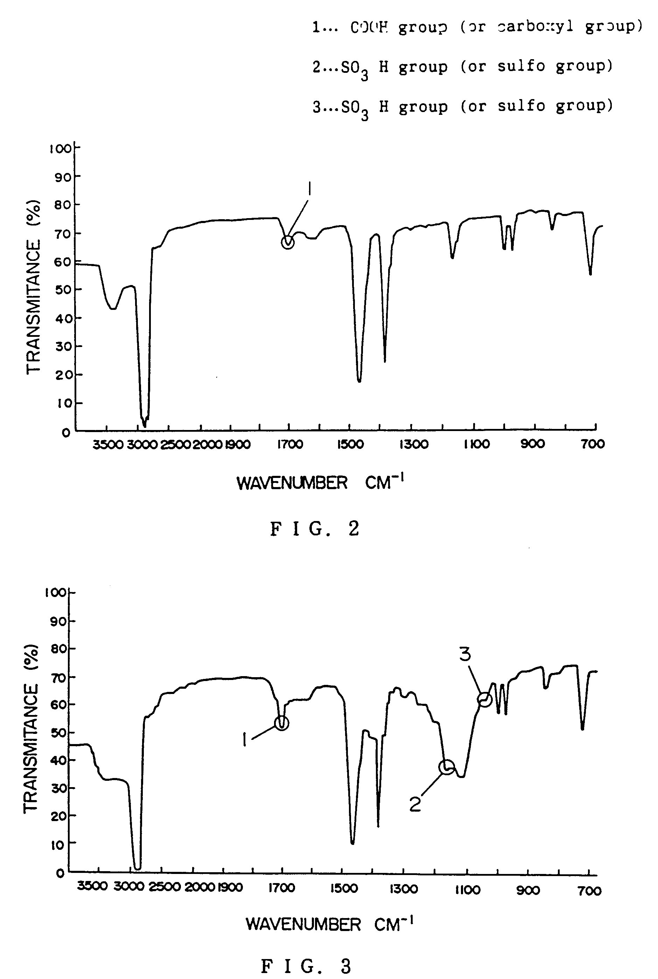

Meanwhile, for confirming the effect of introduction of functional group ($SO_3$ H) by sulfonation, infrared absorption spectra were obtained with the non-woven fabric sheet before sulfonation and storage battery separator obtained thereafter in Example 2 using an infrared spectrophotometer (IR-408 by Shimazu Seisakusho). Figures 2 and 3 show these infrared spectra. In figures 2 and 3, 1 is COOH group (carboxyl group), 2 is $SO_3$ H group (sulfo group), and 3 is $SO_3$ H group (sulfo group). As can be seen from the physical property table of Figures 2 and 3, owing to the presence of the atom group of $SO_3$ H the storage battery separators according to the invention exhibit excellent affinity to electrolyte without aid of any surface active agent and have satisfactory liquid absorption and retention properties.

Further, the battery separator according to the invention is also satisfactory durable with respect to alkali resistance and oxidization resistance, and further it is subject to less mechanical strength reduction in treatment with concentrated sulfuric acid. Thus, it can sufficiently withstand long use for repeated charging and discharging when it is assembled in a storage battery.

Example 5

Conjugate fibers obtained in Fiber production examples 1 and 4 were held dipped in 97 wt% concentrated sulfuric acid at 50 for 3 minutes and then dipped in diluted sulfuric acid, followed by washing with a great amount of water. Then, they were subjected to a neutralization treatment with diluted ammonia water, followed by sufficient washing and drying to obtain conjugate fibers according to the invention. The breakage strength and breakage elongation of the obtained fibers were measured. Table 4 shows the results.

Table 4

| | Fibers of Fiber production example 1 | Fibers of Fiber production example 2 |
|---|---|---|
| Breaking strength (g/D) | 2.8 | 2.0 |
| Breaking elongation (%) | 32 | 48 |

Further, the conjugate fibers of Fiber production examples 2, 3, 5 and 6 and non-woven fabric sheet of non-woven fabric sheet production example 1 were subjected to treatment with sulfuric acid under the same conditions as in example 2. Like the case of example 2, ready sulfo group introduction into the sheath component could be obtained.

As has been shown, according to the invention by using an ethylene copolymer containing a unit represented by a formula -$CH_2$ -CH(COOH)- for the surface portion of conjugate fibers and using polypropylene or like polyolefin fibers for the core portion of the fibers, ready sulfo group introduction can be obtained through a treatment with concentrated sulfuric acid or the like to obtain a copolymer containing a unit represented by a formula

$$-CH_2-C(SO_3H)(COOH)-,$$

and thus impart hydrophilicity to the fibers. By using a thermal bonding non-woven fabric sheet obtained from the conjugate fibers as an alkaline battery separator, it is possible to maintain high discharge capacity percentage as shown in Figure 1.

The sulfonated conjugate fibers according to the invention can be utilized extensively for non-woven fabrics, woven fabrics, cloth, knit fabrics, filament fibers, spun yarns, melt-blow non-woven fabric sheet, paper, etc. as well as the non-woven fabric sheet noted above.

## Claims

1. A separator material for storage batteries, comprising a non-woven fabric sheet made of sulfonated conjugate fibers comprising at least first and second components thermally bonded together, said first component being a thermal bonding component and occupying a surface layer, said second component occupying a core portion, said first component comprising an ethylene copolymer containing at least a unit represented as

$$-CH_2-C(SO_3H) (COOH)-$$

and comprising 0.5 to 25% by weight of ethylenecarbonic acid monomer and 99.5 to 75% by weight of ethylene monomer, said ethylenecarbonic acid monomer containing 0.5 to 25% by weight of acrylic acid and/or maleic acid and 0 to 24.5% by weight of acrylic acid ester, said second component comprising a non-sulfonated polyolefin, said first component having a melting point $Tm_2$ °C of $70<Tm_1<130$ and said second component having a melting point $Tm_2$ °C of $Tm_1 + 20 <Tm_2<250$, said first component occupying 30% or more of the fiber surface, said sheet comprising a mixture of 30% or more by weight of said conjugate fibers.

2. A battery separator material according to claim 1, wherein the ethylenecarbonic acid comprises 0.4 to 4 mole% of the ethylene copolymer.

3. A battery separator material according to claim 1 or 2, wherein the sulfonated conjugate fibers are core-sheath conjugate fibers with the sheath and core components representing the first and second components, respectively.

4. A battery separator material according to claim 1, wherein the sulfonated conjugate fibers are thermally bonding fibers consisting of a precursor comprising a first component occupying a surface layer and having a comparatively low melting point and a second component occupying a core portion and having a comparatively high melting point, said first component comprising an ethylene copolymer containing at least a unit represented by the formula $-CH_2-C(H)(COOR)-$, where COOR represents a carboxylic group or an ester group, and said second component being a polyolefin having a melting point not higher than 250°C.

5. A battery separator material according to claim 1, wherein said first and second components of the conjugate fibers are directly bonded to one another in forming said non-woven fabric sheet.

6. A method for making a separator material for storage batteries from a fiber web comprising 30% or more by weight of core-sheath type conjugate fibers of a thermally bonding type, said conjugate fibers comprising a surface portion of an ethylene copolymer comprising 0.5 to 25% by weight of ethylenecarbonic monomer and 99.5 to 75% by weight of ethylene, said ethylenecarbonic acid monomer containing 0.5 to 25% by weight of acrylic acid and/or maleic acid and 0 to 24.5% by weight of acrylic acid ester, said surface portion having a melting point of $Tm_1$ °C of $70<Tm_1<130$, said fibers further comprising an inner portion of a polyolefin having a melting point $TM_2$ °C of $TM_1 + 20 <Tm_2<250$, said method comprising thermally pressing said web by passage through thermal press rollers, thereby forming a non-woven fabric sheet through thermal bonding of the constituent fibers caused by melting of the surface portion of said core-sheath type conjugate fibers, and sulfonizing said sheet by dipping in a concentrated sulfuric acid bath heated to 30 to 90°C, thereby introducing sulfo groups into tertiary carbon atom locations of the ethylene copolymer of the surface portion to replace hydrogen groups.

## Patentansprüche

1. Separatormaterial für Speicherbatterien, das eine Textilverbundstoffbahn aus sulfonierten Zweikomponentenfasern umfaßt, die wenigstens erste und zweite thermisch miteinander verbundene Komponenten umfassen, wobei die erste Komponente eine thermisch Haftkomponente ist und eine Oberflächenschicht besetzt, die zweite Komponente einen Kernbereich besetzt, die erste Komponente ein Ethylencopolymer umfaßt, welches wenigstens eine Einheit enthält, die dargestellt wird als

$$-CH_2-C(SO_3H)(COOH)-$$

und 0,5 bis 25 Gew.-% Ethylencarbonsäuremonomer und 99,5 bis 75 Gew.-% Ethylenmonomer umfaßt, wobei das Ethylencarbonsäuremonomer 0,5 bis 25 Gew.-% Acrylsäure und/oder Maleinsäure und 0 bis

13

24,5 Gew.-% Acrylsäureester umfaßt, die zweite Komponente ein nicht-sulfoniertes Polyolefin umfaßt, die erste Komponente einen Schmelzpunkt $Tm_2$ °C von 70 < $Tm_1$ < 130 besitzt und die zweite Komponente einen Schmelzpunkt $Tm_2$ °C von $Tm_1$ + 20 < $Tm_2$ < 250 besitzt, wobei die erste Komponente 30% oder mehr der Faseroberfläche besetzt, wobei diese Bahn ein Gemisch aus 30 Gew.-% oder mehr der Zweikomponentenfasern umfaßt.

2. Batterieseparatormaterial nach Anspruch 1, worin die Ethylencarbonsäure 0,4 bis 4 Mol% Ethylencopolymer umfaßt.

3. Batterieseparatormaterial nach Anspruch 1 oder 2, worin die sulfonierten Zweikomponentenfasern Kern-Hülse-Zweikomponentenfasern sind, bei denen die Hülse- und Kernkomponenten die ersten bzw. die zweiten Komponenten darstellen.

4. Batterieseparatormaterial nach Anspruch 1, worin die sulfonierten Zweikomponentenfasern thermische Haftungsfasern sind, die aus einer Vorstufe bestehen, die eine erste Komponente, welche eine Oberflächenschicht besetzt und einen vergleichsweise niedrigen Schmelzpunkt besitzt und eine zweite Komponente, die einen Kernbereich besetzt und einen vergleichsweise hohen Schmelzpunkt besitzt, umfaßt, wobei die erste Komponente ein Ethylencopolymer umfaßt, das wenigstens eine durch die Formel -$CH_2$-C(H) (COOR)- dargestellte Einheit enthält, worin COOR eine Carboxylgruppe oder eine Estergruppe darstellt, und wobei die zweite Komponente ein Polyolefin mit einem Schmelzpunkt von nicht höher als 250 °C ist.

5. Batteriesepararatormaterial nach Anspruch 1, worin die ersten und zweiten Komponenten der Zweikomponentenfasern durch Ausbildung der Verbundstoffbahn direkt aneinander gebunden sind.

6. Verfahren zur Herstellung eines Separatormaterials für Speicherbatterien aus einem Fasergewebe, das 30 Gew.-% oder mehr kern-hülse-artiger Zweikomponentenfasern eines thermischen Bindungstyps umfaßt, wobei die Zweikomponentenfasern einen Oberflächenbereich eines Ethylencopolymers umfassen, das 0,5 bis 25 Gew.-% Ethylencarbonsäuremonomer und 99,5 bis 75 Gew.-% Ethylen umfaßt, wobei das Ethylencarbonsäuremonomer 0,5 bis 25 Gew-% Acrylsäure und/oder Maleinsäure und 0 bis 24,5 Gew.-% Acrylsäureester umfaßt, der Oberflächenbereich einen Schmelzpunkt $Tm_1$ °C von 70 < $Tm_1$ < 130 aufweist, die Fasern ferner einen inneren Bereich aus einem Polyolefin mit einem Schmelzpunkt $TM_2$ °C von $TM_1$ + 20 < $Tm_2$ < 250 umfassen, wobei das Verfahren ein thermisches Pressen des Gewebes durch Durchleiten durch Thermopresswalzen umfaßt, wodurch eine Textilverbundstoffbahn durch das thermische Verbinden der Bestandteilfasern aufgrund des Schmelzens des Oberflächenbereichs der kern-hülse-artigen Zweikomponentenfasern ausgebildet wird, und Sulfonieren der Schicht durch Eintauchen in ein konzentriertes Schwefelsäurebad, das auf 30 bis 90 °C erwärmt ist, wodurch Sulfogruppen in die Stellen am tertiären Kohlenstoffatom des Ethylencopolymers des Oberflächenbereichs eingeführt werden, um die Wasserstoffgruppen zu ersetzen.

## Revendications

1. Matériau de séparation pour accumulateurs, comprenant une feuille de tissu non tissé réalisée en fibres mixtes sulfonées, comprenant au moins un premier et un deuxième composants thermiquement liés ensemble, ce premier composant étant un composant thermiquement liant et formant une couche superficielle, le deuxième composant constituant une partie formant âme, le premier composant comprenant un copolymère d'éthylène contenant au moins un motif de formule :
-$CH_2$-C($SO_3H$)(COOH)-
et comprenant de 0,5 à 25 % en poids d'un monomère acide éthylènecarbonique et de 99,5 à 75 % en poids d'un monomère éthylène, ce monomère éthylènecarbonique contenant de 0,5 à 25 % en poids d'acide acrylique et/ou d'acide maléique, et de 0 à 24,5 % en poids d'un ester d'acide acrylique, le deuxième composant comprenant une polyoléfine non sulfonée, le premier composant ayant un point de fusion $Tm_2$ en °C, de 70<$Tm_1$<130, et le deuxième composant ayant un point de fusion $Tm_2$ en °C de $Tm_1$ + 20 < $Tm_2$ < 250, le premier composant occupant 30 % ou plus de la surface des fibres, et la feuille comprenant un mélange de 30 % en poids ou plus de ces fibres mixtes.

2. Matériau de séparation pour accumulateur selon la revendication 1, dans lequel l'acide éthylènecarbonique représente de 0,4 à 4 moles % du copolymère d'éthylène.

3. Matériau de séparation pour accumulateur selon la revendication 1 ou 2, dans lequel les fibres mixtes sulfonées sont des fibres mixtes formant âme et enveloppe, les composants d'enveloppe et d'âme correspondant respectivement au premier et au deuxième composants.

4. Matériau de séparation pour accumulateur selon la revendication 1, dans lequel les fibres mixtes sulfonées sont des fibres thermiquement liantes consistant en un précurseur comprenant un premier composant formant une couche superficielle, et ayant un point de fusion relativement bas, et en un deuxième composant constituant une partie formant âme et ayant un point de fusion relativement élevé, le premier composant comprenant un copolymère d'éthylène contenant au moins un motif de formule -$CH_2$-C(H) (COOR)-, COOR représentant un groupe carboxyle ou un groupe ester, et le deuxième composant étant une polyoléfine ayant un point de fusion non supérieur à 250 °C.

5. Matériau de séparation pour accumulateur selon la revendication 1, dans lequel les premier et deuxième composants des fibres mixtes, sont directement liés entre eux pour former ladite feuille de tissu non tissé.

6. Procédé de fabrication d'un matériau de séparation pour accumulateurs, à partir d'une nappe de fibres comprenant 30 % en poids ou plus de fibres mixtes du type formant âme et enveloppe et du type thermiquement liant, ces fibres mixtes comprenant une partie superficielle d'un copolymère d'éthylène comprenant de 0,5 à 25 % en poids d'un monomère acide éthylènecarbonique et de 99,5 à 75 % en poids d'éthylène, le monomère acide éthylènecarbonique contenant de 0,5 à 25 % en poids d'acide acrylique et/ou d'acide maléique, et de 0 à 24,5 % en poids d'un ester d'acide acrylique, la partie superficielle ayant un point de fusion $Tm_1$ en °C de $70 < Tm_1 < 130$, les fibres comprenant en outre une partie intérieure constituée d'une polyoléfine ayant un point de fusion $Tm_2$ en °C de $Tm_1 + 20 < Tm_2 < 250$, selon lequel on presse à chaud la nappe en la faisant passer entre des cylindres de presse thermique, de façon à former une feuille de tissu non tissé par liaison thermique des fibres la constituant due à la fusion de la partie superficielle des fibres mixtes de type formant âme et enveloppe, et on sulfone la feuille par immersion dans un bain d'acide sulfurique concentré chauffé à 30 jusqu'à 90 °C, de façon à introduire des groupes sulfo sur les atomes de carbone tertiaires du copolymère d'éthylène de la partie superficielle afin de remplacer des groupes hydrogène.

F I G. 1

16

1... COOH group (or carboxyl group)

2...SO$_3$H group (or sulfo group)

3...SO$_3$H group (or sulfo group)

F I G. 2

F I G. 3

17

FIG. 4